# EUROPEAN PATENT SPECIFICATION

(11) **EP 0 689 893 B1**
(45) Date of publication and mention of the grant of the patent: **24.02.1999**
(21) Application number: 95304493.0
(22) Date of filing: 26.06.1995
(51) Int. Cl.: B23H 7/04, B23H 1/02

(54) **Electric discharge working method and apparatus**
Verfahren und Vorrichtung zur Funkenerosionsbearbeitung
Procédé et dispositif d'usinage par électroérosion

(30) Priority: 27.06.1994 JP 165800/94
(43) Date of publication of application: 03.01.1996
(73) Proprietor: FANUC LTD., Minamitsuru-gun, Yamanashi 401-05 (JP)
(72) Inventor: Izumiya, Syunzo, Kitatsuru-gun, Yamanashi, 409-01 (JP); Sakurai, Akihiro, FANUC Dai3virakaramatsu, Minamitsuru-gun, Yamanashi, 401-05 (JP); Kawahara, Akiyoshi, Room 6-110, FANUC, Minamitsuru-gun, Yamanashi, 401-05 (JP); Murai, Masao, Room 10-103, FANUC Manshonharimomi, Minamitsuru-gun, Yamanashi, 401-05 (JP)
(74) Representative: Billington, Lawrence Emlyn

(56) References cited:
- EP-A- 0 178 330
- EP-A- 0 495 985
- EP-A- 0 545 156
- DE-A- 4 029 578
- PATENT ABSTRACTS OF JAPAN vol. 014 no. 081 (M-0935) ,15 February 1990 & JP-A-01 295716 (HODEN SEIMITSU KAKO KENKYUSHO LTD) 29 November 1989,

## Description

The present invention relates to an electric discharge working method and apparatus, for example to an electric discharge working method and apparatus for generating an intermittent electric discharge to an interelectrode space formed between a working electrode and a workpiece to execute a material removing process for the workpiece. More particularly, the present invention relates to an electric discharge working method and apparatus for preventing an electrolytic corrosion when using a water soluble working liquid.

In the electric discharge working, the electrolytic action is known to cause a fall in working accuracy. Generally, in the electric discharge working, a working electrode and a workpiece are opposed to each other with a minute gap left therebetween, and the working liquid fills the gap. There is a case that the water soluble working liquid having an electrolytic characteristic such as a water is used for the working liquid.

In the case of electric discharge working there is a problem such that the electrolytic action causes a deterioration of a working face when a voltage is applied to an interelectrode space. While an electric discharge inducing voltage is applied to a working gap, electrolytic current increases as the electric discharge inducing voltage increases. This electrolytic current ionizes and elutes (erodes) the workpiece, causing the deterioration of working face quality. The amount of elution is, for example, from several µm to ten and several µm, causing a serious problem, especially when the working is required to maintain high accuracy at the level of several µm. Also, in the case where the workpiece is an alloy, the elution speed varies depending on alloy content, and this can caused an excessive removal of one specific metal and the like. For example, in the case where the workpiece is an iron-based material, the conductance of the working liquid becomes non-uniformly distributed, so that the working accuracy tends to decrease or rust tends to be generated. In the case of a cemented carbide containing the cobalt as a binding material, there is a problem such that the cobalt is eluted by being ionized, causing defective material quality and the like.

Previously considered methods for preventing the deterioration of the working surface caused by electrolytic action are as follows:
(1) A first method is of applying a voltage with polarity reverse to that of the electric discharge inducing voltage to the interelectrode space during a pause after finishing the electric discharge, thereby eliminating uneven distribution of the interelectrode space voltage in such a manner that the average interelectrode space voltage becomes 0V.
(2) A second method is of applying the electric discharge inducing voltage with polarity reverse to that of the main electric discharge power source, thereby reducing uneven distribution of the interelectrode voltage, as shown in the official gazette of Japanese Patent Laying Open No. 60-146624.
(3) A third method is of applying alternating voltage of high-frequency to induce the electric discharge, as shown in the official gazette of Japanese Patent Laying Open No. 56-82127.

In the above mentioned previously considered methods preventing the surface deterioration of the workpiece, there are following problems:
(1) In the first method of applying a voltage with a polarity reverse to that of the electric discharge inducing voltage to the interelectrode space during a pause period, there is a problem that the pause period is substantially prolonged, causing a cycle of the electric discharge contributing the working to become longer, thereby further causing the slowing of working speed.
(2) In the second method of applying the electric discharge inducing voltage with a polarity reverse to the main electric discharge power source, there is no slowing of the working speed, but it is difficult to make the average voltage of the interelectrode space 0V, so that the distribution of the interelectrode space voltage remains uneven. Thus, there remains a problem that the electrolytic action cannot fully be controlled.
   While the main electric discharge current is supplied, the interelectrode space is in the electric discharge state, and the interelectrode space voltage is maintained near the arc voltage, or in general at a voltage lower than the electric discharge inducing voltage. And, in many instances, the duration of the main electric discharge current is usually shorter than the duration of the applied electric discharge inducing voltage. This causes the average interelectrode voltage to be considerably deviated in the polarity of the electric discharge inducing voltage.
(3) The third method of applying an alternating voltage of high-frequency requires an oscillator of high-frequency, which makes the circuit complex and expensive. Also, it is necessary to connect the resonance circuit which tunes with the frequency of the electric discharge inducing power source to the interelectrode space. However, there is a problem such that the variation of the interelectrode inductance causes the disorder of turning, thereby further causing the variation of applied voltage.

As a solution to such problems, there is a method in which the polarity of the electric discharge inducing voltage is changed alternately for every electric discharge or in a cycle such that the positive polarity and the negative polarity occur at equal frequency (for example, EP-A-0 679 467 relevant under Article 54(3) EPC). In this method, the electric discharge inducing voltage of a positive polarity and the electric discharge inducting voltage of a positive polarity and the electric discharge inducing voltage of a reverse polarity are made to occur at equal frequency, and the average voltage is set to 0V.

Even in this method, however, the interelectrode space voltage (arc voltage) during the main electric discharge current flows is not taken into consideration, so that actually there exists the uneven distribution of the interelectrode space voltage.

Further, there is another problem such that the wear of the electrode is accelerated as the frequency of the electric discharge increases, since the current of the reverse polarity flows from the start of the electric discharge until the main working current starts to flow, a short period of time to continue several hundred ns, in the case where the electric discharge inducing voltage of reverse polarity is applied.

Also, there is a problem that the local stray current corrosion occurs especially in the case where an interval of the electric discharge at the notched portion and the like is prolonged, since the voltage of the constant polarity is continuously applied thereto from the start of the application of the voltage to the start of the induction of electric discharge.

It is, therefore, desirable to solve the above mentioned problems and to provide an electric discharge working method and an apparatus of the same which are capable of surely preventing the surface deterioration of the workpiece which is caused by an electrolytic action. Also, it is desirable to provide an electric discharge working method and an apparatus of the same capable of executing the working in which the surface deterioration of the workpiece can completely be prevented depending on the vulnerability of the workpiece to the stray current corrosion or the working in which the wear of the electrodes can be controlled in order for the working to be executed at optimum condition depending on the material of the workpiece to be worked, as well as capable of preventing the surface deterioration of the workpiece even when the interval between electric discharges is prolonged.

According to a first aspect of the present invention there is provided an electric discharge working method, wherein an electric discharge inducing voltage is applied to the interelectrode space formed between a working electrode and a workpiece, and the main electric discharge inducing current is superposed immediately after the dielectric breakdown which occurs at the interelectrode space caused by the discharge induced by the electric discharge inducing voltage. In the method the interelectrode space voltage is detected and the polarity of the electric discharge inducing voltage applied across the electrodes is changed depending on the detected interelectrode space voltage in such manner that the value over time of the interelectrode space voltage coincides with a reference value thereof.

The changing over of the polarity of the electric discharge inducing voltage in an electric discharge working method embodying the present invention may be executed by integrating the interelectrode space voltage between the working electrode and the workpiece, changing the polarity to the interelectrode space of the electric discharge inducing voltage in such a manner that the integrated value of the interelectrode space voltage becomes a reference value. This reference value may be 0.

Another method can detect the average interelectrode space voltage and changing the polarity of the electric discharge inducing voltage so that the average interelectrode space voltage coincides with its reference value, and comprises the steps of applying an electric discharge inducing voltage across the interelectrode space formed between a working electrode and a workpiece, detecting the occurrence of the electric discharge resulting from the interelectrode dielectric breakdown caused by the application of the electric discharge inducing voltage, simultaneously supplying working current pulse between the electrodes to execute the material removing process of the workpiece, these processes including predetermined pauses being repeated. In this electric discharge working method, the reference voltage can be variable.

Also, an application of the electric discharge inducing voltage can be stopped in a case where the electric discharge is not induced within a predetermined time after the application of the electric discharge inducing voltage is started, and after a short pause period other than those of usual working, an application of next electric discharge inducing voltage can be started.

According to a second aspect of the present invention, there is provided an electric discharge working apparatus as defined in attached claim 7.

A particular embodiment of the second inventive aspect may comprise an electric discharge inducing circuit, including at least one direct current circuit, for inducing the interelectrode electric discharge, a main discharge circuit for superposing the main electric discharge current for working after the occurrence of the electric discharge and a switching circuit for changing the polarity of the voltage to be applied between electrodes by the electric discharge inducing circuit, the switching circuit comprising an integrating means for integrating the interelectrode space voltage to obtain its integrated value and a comparison means for comparing the integrated value with the reference value, the output of the comparison means being used for changing the polarity of the voltage to be applied to the interelectrode space.

In one example of electric discharge working embodying the present invention, the electric discharge inducing voltage is applied to the interelectrode space between working electrode and the workpiece, thereby causing the interelectrode dielectric breakdown to induce the electric discharge. And, as to the polarity of the electric discharge inducing voltage to be applied to the interelectrode space, for example, the polarity same as that of the main electric discharge electric source for sending the main electric discharge current may be treated as the positive polarity, while the polarity reverse to that of the same electric source may be treated as the reverse polarity, where the workpiece is treated as a reference.

Also, electric discharge working apparatus embodying the present invention, which is designed to execute the working on the workpiece by the intermittent electric discharge generated between a working electrode and a workpiece, may comprise an electric discharge inducing circuit, including at least one direct current circuit, for inducing the electric discharge at the interelectrode space, a main electric discharge circuit for superposing main electric discharge current following the electric discharge and a switching circuit for changing the polarity of the voltage to be applied to the interelectrode space by the electric discharge inducing circuit, the switching circuit comprising an integrating means for integrating the interelectrode space voltage to obtain its integrated value and a comparison means for comparing the integrated value with the reference value, the output of the comparison means being used changing the polarity of the voltage to be applied to the interelectrode space.

Further, electric discharge working apparatus embodying the present invention, which is designed to execute the material removing process of the workpiece by the intermittent electric discharge generated in the interelectrode space formed between a working electrode and a workpiece to supply the working current, may comprise an electric discharge inducing circuit for applying either the voltage of positive polarity or the voltage of negative polarity to induce the electric discharge at the interelectrode space, a main electric discharge circuit for supplying working current pulse to the interelectrode space following the start of electric discharge, a detecting means for detecting the average of the interelectrode space voltages, a comparison means for comparing the detected value with the reference value, a control means for outputting the signal for causing the output from the comparison means for outputting the signal for changing the output polarity of the electric discharge inducting circuit.

In the electric discharge working apparatus embodying the present invention, the reference value may be variable. Also, the control means may comprise a first timer that operates only during the application of the voltage to the interelectrode space, a second timer that defines the pause period of working during usual working, and a third timer that defines the pause period other than that during normal working, stops an operation command to the electric discharge inducing circuit and operates the third timer by an output of the first timer, and starts an application of next electric discharge inducing voltage by an output of the third timer.

In a first construction of the electric discharge working apparatus embodying the present invention, the electric discharge inducing circuit comprises one direct current power source and two connecting circuits through which the voltages of different polarities from the direct current power source are applied to the interelectrode space, and the polarity of the electric discharge inducing voltage to be applied between the interelectrode space is changed by selecting the connecting circuit by the switching circuit.

In a second construction of the electric discharge working apparatus embodying the present invention, the electric discharge inducing circuit comprises two direct current power sources intended for connections in the different directions, reverse to each other, with respect to the interelectrode space, and the polarity of the electric discharge inducing voltage to the interelectrode space is changed by selecting the direct electric source by the switching circuit.

In such electric discharge working embodiment the present innovation, first the electric discharge inducing voltage is applied in a direction for a certain polarity from the electric discharge inducing circuit to the interelectrode space formed between the working electrode and the workpiece. In the interelectrode space applied with the electric discharge inducing voltage, the dielectric breakdown occurs due to the electric discharge inducing voltage after a certain lapse of time, causing the start of the electric discharge. From the time at which this electric discharge is started, the main electric discharge power source supplies the main electric discharge to the interelectrode space to continue the electric discharge for a predetermined period of time. The voltage at the interelectrode space at the time of electric discharge is lower than the electric discharge inducing voltage. The electric discharge working of the workpiece is executed by this electric discharge. The interelectrode discharge can be stopped by discontinuing the supply of main electric discharge current after predetermined period of time has elapsed. After the electric discharge is stopped, the dielectric state of the interelectrode space is recovered by providing a pause, thereby terminating one cycle of the electric discharges.

The interelectrode discharge maybe induced by reversing the direction of polarity of electric discharge inducing voltage to be applied across the electrodes through the electric discharge inducing circuit. The electric discharge inducing voltage of the reverse polarity is merely reverse in polarity but similar in function, so that, even with this polarity, the dielectric breakdown occurs on the interelectrode space to start the electric discharge after a certain lapse of time just like the case of previously described electric discharge process. And, the subsequent electric discharge working are executed similarly. Thus, the electric discharge inducing voltages before the electric discharge differ only in the polarity to the interelectrode space, and the function thereof at the time of the electric discharge is similar.

In such electric discharge working embodiment the present invention, the changing over of the polarity of the electric discharge inducing voltage to the interelectrode space is executed by detecting a voltage of the interelectrode space and based on the interelectrode space voltage, that is, is executed by obtaining an average voltage of the interelectrode space associated with the interelectrode space voltage value and the applied time by integrating the interelectrode space voltage between the working electrode and the workpiece, and making the average voltage of the interelectrode space into the reference value.

The time from the application of the electric discharge inducing voltage to the start of the electric discharge varies depending on a state of the interelectrode space. So, duration of the application of the electric discharge inducing voltage varies according to the individual electric discharges. However, since the values relating the interelectrode space voltage value and the applied time are obtained, in embodiments of the present invention, by integrating the interelectrode space voltage between the working electrode and the workpiece, the averaged interelectrode space voltage-can be corresponded with the reference value, and the deterioration of the surface of the workpiece caused by the electrolytic action caused due to the application of the electric discharge inducing voltage may be effectively prevented. Also, the reference value may be variable.

If electric discharge has not been induced within a predetermined period of time after applying electric discharge inducing voltage, the application of the voltage is discontinued, and next application of voltage is started after a pause period that is shorter than the pause period that is shorter than the pause period during normal operation.

The change of the polarity of the electric discharge inducing voltage in an embodiment of the present invention is executed by driving the switching circuit by the control circuit which outputs the control signal in response to the occurrence of the electric discharge, and the switching circuit executes a change of the contacting state of the electric discharge inducing power source or selecting one from among the electric discharge inducing power sources different in polarity by controlling the opening and closing of the switch means installed among the electric discharge inducing power source and the interelectrode space. Through the control of the electric discharge inducing power source, the polarity of the electric discharge inducing voltage applied across the interelectrode space is switched. The average voltage of the electric discharge inducing voltages at the interelectrode space used as the reference value. The influence due to the electrolytic action caused by the application of the electric discharge inducing voltage is substantially eliminated to prevent surface deterioration of the workpiece.

As a result, an electric discharge working method and apparatus embodying the present invention can provide the following effects.

The average voltage at the interelectrode space can be set near the reference voltage, whereby the deterioration of the surface of the workpiece caused by the electrolytic action and the wear of the electrode can be harmonized, and the optimum working adapted to the material of the workpiece can be realized.

Reference will now be made, by way of example, to the accompanying drawings, in which:
Fig. 1 is a block diagram of a power source section of a first embodiment of the present invention;
Fig. 2 is a time chart of the first embodiment of the present invention;
Fig. 3 is a time chart of the first embodiment of the present invention;
Fig. 4 is a circuit connection diagram of the power source section of the first embodiment of the present invention;
Fig. 5 is a circuit connection diagram of the power source section of the first embodiment of the present invention;
Fig. 6 is a circuit connection diagram of the power source section of the first embodiment of the present invention;
Fig. 7 is ablock diagram view of a power source section of a second embodiment of the present invention;
Fig. 8 is a block diagram of a power source section of a second embodiment of the present invention; and
Fig. 9 is a constructional view of a power source section of another embodiment of the present invention.

An electric discharge working apparatus embodying the present invention for executing an electric discharge working is substantially similar to previously-considered electric discharge working apparatus, but its characteristics consist in the method and the apparatus for applying a voltage to an interelectrode space between a working electrode and a workpiece. Accordingly, in the following embodiments of the present invention, the construction in which the voltage is applied to the interelectrode space will be described mainly, and so the explanation of the known electric discharge working apparatus will be omitted.

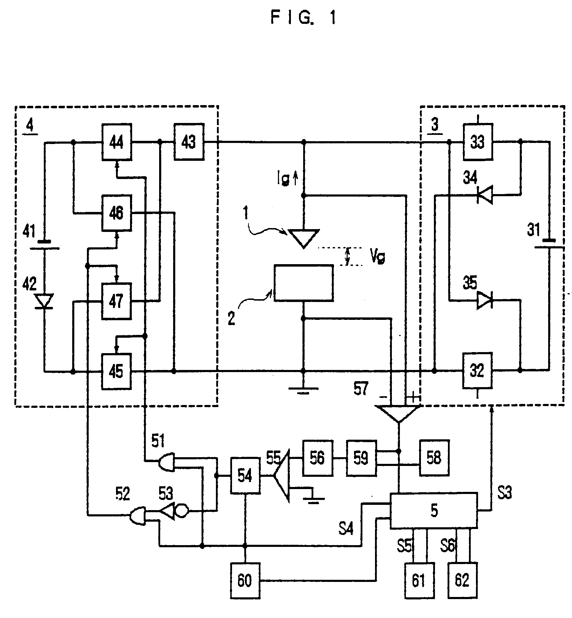

First, the construction and the operation of a first embodiment of the present invention will be described with reference to Figs. 1 to 6.

Fig. 1 is a block constructional diagram of a power source section of an electric discharge working apparatus, which explains a first embodiment of the present invention. In Fig. 1, reference numeral 1 denotes a working electrode, 2 denotes a workpiece, and this working electrode 1 is arranged confronting the workpiece 2 leaving a certain space therebetween, so that the space forms an interelectrode space in which electric discharge occurs. In the interelectrode space formed between the grounded workpiece 2 and the working electrode 1, the electric discharge working is executed for the workpiece 2 by generating an intermittent electric discharge through a working liquid.

The power source section of the electric discharge apparatus of Fig. 1 comprises two power source sections, that are the main electric discharge circuit 3 and the electric discharge inducing circuit 4. The electric discharge inducing circuit 4 is a circuit for inducing the electric discharge at the interelectrode space, while the main electric discharge circuit 3 is a circuit for supplying a main electric discharge current for the electric discharge working following the induction of electric discharge by the electric discharge inducing circuit 4. The main electric discharge circuit 3 and the electric discharge inducing circuit 4 are driven in response to a control signal from the control circuit 5.

The main electric discharge circuit 3 has a main electric discharge power source 31 for supplying a main electric discharge current across the electrodes, and constitutes a closed circuit of the main electric discharge current through the switching element 32 and the switching element 33, both of which are connected in series. In the main electric discharge circuit, for example, the diode 34 is connected in a direction from one of electrode terminals of the main electric discharge power source 31 to a grounding terminal of the workpiece 2, while the diode 35 is connected in a direction from the working electrode 1 to the other electrode terminal of the main electric discharge power source 31 to thereby constitute a cross-type power source. Make and break operation of the switching elements 32 and 33 is executed through the control signal s3 from the control circuit 5.

The electric discharge inducing circuit 4 has an electric discharge inducing power source 41 for applying an electric discharge inducing voltage at the interelectrode space, and constitutes a closed circuit for applying the electric discharge inducing voltage through the diode 42 and the current restricting resistance 43, both of which are connected in series. In the electric discharge inducing circuit 4, the circuit for changing the polarity of the electric discharge inducing voltage to be applied to the working electrode 1 is constituted by the switching elements (44 to 47). In the first embodiment, the switching circuit by the switching elements (44 to 47) is constituted by connecting the switching element 44 between one electrode of the electric discharge inducing power source 41 and the working electrode 1, connecting the switching element 45 between the other electrode of the electric discharge inducing power source 41 and a grounding side of the workpiece 2, connecting the switching element 45 between one electrode of the electric discharge inducing power source 41 and the grounding side of the workpiece 2, and connecting the switching element 47 between the other electrode of the electric discharge inducing power source 41 and the working electrode 1. And, the same control signal is inputted to the switching element 44 and switching element 45 to simultaneously control their make and break operations. Make and break operations of the switching element 46 and switching element 47 are also controlled simultaneously by inputting to them the control signal different from the control signal inputted to the switching element 44 and switching element 45.

Also, in the embodiment of the present invention, the polarity of main electric discharge power source is set positive but is not limited to this, and this the polarity can be reversed depending on the kind of working to be carried out.

The control circuit 5 is inputted with the interelectrode space voltage between the working electrode 1 and the workpiece 2 to detect the electric discharge, and outputs a control signal s3 to the main electric discharge circuit 3 and outputs a control signal s4 to the electric discharge inducing circuit 4 in response to the electric discharge detection signal.

Also, the switching circuit receives the input of interelectrode space voltage and the control signal s4 from the control circuit 5 and controls the make and break of the switching element of the electric discharge inducing circuit 4, this circuit comprising, in the first embodiment, a differential amplifier 57 for detecting the interelectrode space voltage, a reference voltage 58, a adder 59 for outputting a sum of the interelectrode space voltage from the differential amplifier 57 and the reference voltage 58, a integrator 56 for integrating on output of the adder 59, a comparator 55 for comparing an integrated value of the integrator 56 with 0V, a latching circuit 54 for receiving as an input signal an output of the comparator 55 and the control signal s4 from the control circuit 5, an AND gate 51 for taking a logical product of an output of the latching circuit 54 and the control signal s4 to output the AND output thereof to the switching element 44 and the switching element 45, and AND gate 52 for taking a logical product of an inverted output of latching circuit 54 and control signal s4 to output the AND output thereof to switching element 46 and switching element 47. Incidentally, an inverted output of the latching circuit 54 can be obtained by inverting an output of the latching circuit 54 by the inverter 53.

Also, the first timer 60 starts its operation in response to the control signal s4 from the control circuit 5, and outputs to the control circuit 5 a signal which becomes high after the time is up. The first timer 60 operates only while the voltage is applied onto the interelectrode space, stops the application of the voltage when the electric discharge is not induced within a predetermined period of time after the application of the voltage is started. The second timer 61 starts its operation in response to the control signal s5, and outputs to the control circuit 5 a signal which becomes high after the time is up. The second timer 61 defines pause period during the normal working. Also, the third timer 62 starts its operation in response to the control signal s6, and outputs to the control circuit 5 a signal which becomes high after the time is up. The third timer 62 defines pause period shorter than that during the normal working which the second timer 61 defines.

In Fig. 1, the main electric discharge circuit 3 and the electric discharge inducing circuit 4 are represented by dotted lines.

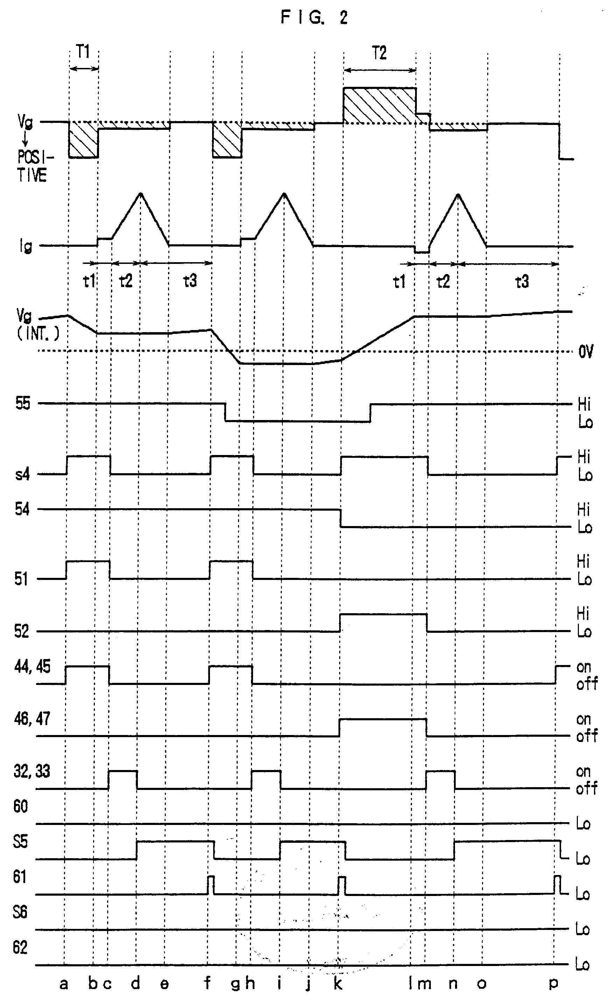

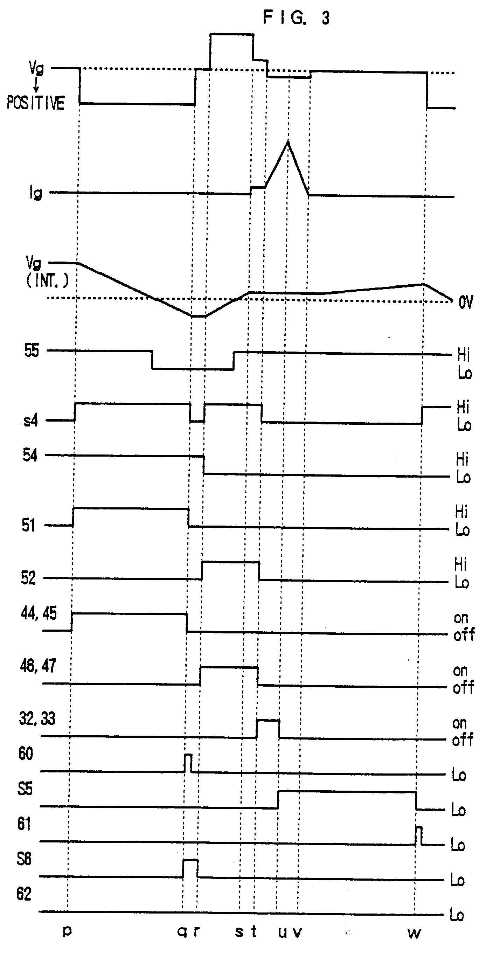

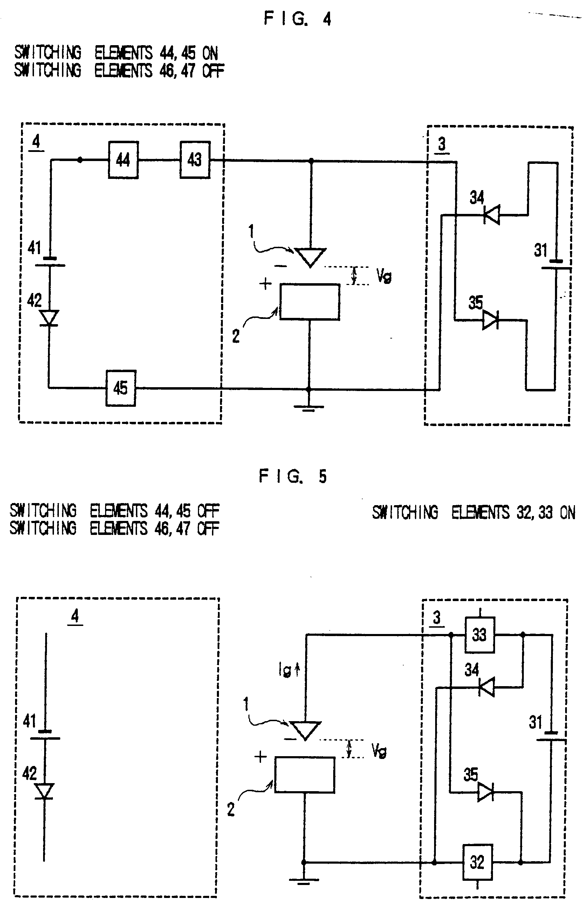

Next, the operation of the embodiment of the present invention will be described with reference to time charts of Figs. 2 and 3, and the circuit diagrams of Figs. 4 to 6. In the following, descriptions are made according to reference symbols, namely, time a to time w in the time charts in Figs. 2 and 3.

In the time chart shown in Fig. 2, periods from time a to the time k and from time p to time r represent those periods in which the electric discharge inducing voltage of positive polarity (as against negative polarity of working electrode with reference to the workpiece) is applied, while periods from time k to time p and from time r to time w represent those periods in which the main electric discharge voltage of negative polarity (as against positive polarity of working electrode with reference to the workpiece) is applied.

The time charts of Figs. 2 and 3 show states of four continuous electric discharges during the electric discharge working. The interelectrode space voltage Vg is detected by the differential amplifier 57. The output of the differential amplifier 57 is inputted to the control circuit 5, and is added with the reference voltage 58 by the adder 59, and then is inputted to the integrator 56 to thereby be integrated.

At the electric discharge working before the time a, it is assumed that the output Vg (INT) of the integrator 56 has been positive; the output of the comparator 55 is high; and the latching circuit 54 is latched at high level. Moreover, in the illustrated example, it is assumed that the reference voltage 58 is set at a positive voltage in order to keep positive the polarity of the average interelectrode space voltage.

Time a: At this point, the control circuit 5 transmits a high control signal s4. In this case, since the output Vg (INT) of the integrator 56 is in a positive state, the output of the comparator 55 is in a high state. In this time chart, since the output of the latching circuit 54 is higher than that before this time, the output of the latching circuit 54 remains unchanged, so that the high output is maintained.

The output of the latching circuit 54 is taken as a logical product of the control signal s4 and the AND gate 51, inverted by the inverter 53, then taken as the logical product of the control signal s4 and the AND gate 52. In this case, since the output of the latching circuit 54 is high, the output of the AND gate 51 also becomes high. This output is inputted to the electric discharge inducing circuit 4 to turn on the switching elements 44 and 45, and to apply the electric discharge inducing voltage of the positive polarity to the interelectrode space.

Also, the first timer 60 starts clocking responding to the control signal s4 and monitors whether or not the electric discharge is induced within a predetermined time.

In the time chart of Fig. 2, the interelectrode space voltage Vg is defined as being of positive polarity at a leading edge thereof and as being of reverse polarity at a trailing edge thereof.

Fig. 3 shows a circuit connection of the power source section of the electric discharge working apparatus in a case where the switching elements 44 and 45 are turned on, the switching elements 46 and 47 are turned off, and the switching elements 32 and 33 are turned off. The positive electrode of the electric discharge inducing power source 41 is connected to the workpiece 2 to apply the positive voltage to the workpiece 2, and the negative electrode of the electric discharge inducing power source 41 is connected to the working electrode 1 to apply the negative voltage to the working electrode 1. Due to the application of these voltages, the electric discharge inducing voltage is applied to the interelectrode space.

When the electric discharge inducing voltage of the positive polarity is applied to the working electrode 1, there is continued a state in which the interelectrode space voltage Vg of the positive polarity is applied to the interelectrode space until the insulation is broken and the start of electric discharge. In the time chart of Fig. 2, a period T1 represents a time interval from the time of application of the electric discharge inducing voltage to the working electrode 1 to the time of dielectric breakdown.

Time b: At this point, when interelectrode dielectric breakdown occurs to cause the electric discharge, the interelectrode space voltage Vg drops (In the time chart in Fig. 2, it is represented as an upward change). Thus, the output of the differential amplifier 57 decreases, and the control circuit 5 detects this drop of voltage as the start of electric discharge.

Time c: At this point, the control circuit 5 detecting the electric discharge outputs high control signal s3 to turn on the switching elements 32 and 33 of main electric discharge inducting circuit 3, and outputs low signal s4 to turn off the switching elements 44 and 45. By turning on the switching elements 32 and 33, the main electric discharge power source 31 is applied to the interelectrode space between electrode 1 and workpiece 2, and the main electric discharge current Ig is supplied in the direction of an arrow. In this case, a small amount of the voltage Vg is applied across the electrodes, and the integrator 56 continues the integration further to output the integrated value Vg (INT).

The integrated value Vg (INT) of the integrator 56 decreases during the period T1, the value thereof is still positive, so that the output of the comparator 55 remains high, and the output of latching circuit 54 is also maintained high. The output of the latching circuit 54 is maintained high but the control signal s4 of the control circuit 5 becomes low, so that the output of the logical product of the AND gate 51 and the AND gate 52 becomes low to turn off switching elements 44, 45, 46 and 47.

Accordingly, all of the switching elements 44, 45, 46 and 47 are turned off, causing the application of the main electric discharge inducing voltage to the interelectrode space to be discontinued. Fig. 4 shows a circuit connection of the power source section of the electric wiring discharge working apparatus in a case where the switching elements 44, 45, 46 and 47 are turned off and switching elements 32 and 33 are turned on; the electric discharge inducing power source 41 is not connected to the working electrode 1 and the workpiece 2; a positive electrode of the main electric discharge power source 31 is connected to the workpiece 2; a negative electrode of the main electric discharge power source 31 is connected to the working electrode 1, causing the main electric discharge voltage to be applied to the interelectrode space, and the main electric discharge current Ig to flow.

Also, the first timer 60 is in the course of the operation of clocking from the rising up of the control signal s4, however, since the control signal s4 falls to become low before a predetermined time is clocked, the output of the first timer 60 remains low.

Moreover, since there is a time delay during between the detection of the drop of the interelectrode space voltage Vg and the turning on of the switching elements 32 and 33, there occurs a time delay of t1 during between the start of the electric discharge and the turning on of the switching elements 32 and 33. Usually, this time delay is several hundreds ns.

In order to maintain the electric discharge during this time delay, the switching elements 44 and 45 are kept turned on until the switching elements 32 and 33 are turned on.

Moreover, in order to make the electric discharge of the main electric discharge current, a turning on of the switching elements 44 and 45 and a turning on of the switching elements 32 and 33 can be controlled to overlap with each other.

Time d: At this point, the control circuit 5 outputs low control signal s3, after a predetermined time t2 elapsed, turns off the switching elements 32 and 33 of the main electric discharge circuit 3, outputs high control signal s5, and starts to clock the working downtime t3 during a normal working by the second timer 61.

The voltage application to the working electrode 1 of the main electric discharge power source 31 and the workpiece 2 is stopped due to that the switching elements 32 and 33 are turned off; however, since the electromagnetic energy accumulated in an inductance component of the main electric discharge circuit is released through the diodes 34 and 35, the main electric discharge power current Ig continues to flow even after the switching elements 32 and 33 are turned off.

Time e: At this point, when the main electric discharge current Ig is stopped, the interelectrode space voltage Vg becomes 0V, so that only the reference voltage 58 is integrated by the integrator 56.

In this case, since the sum of the time until the electric discharge occurs following the application of the voltage and the duration of the electric discharge between time a and time e is short, the output Vg (INT) of the integrator 56 remains positive, so that, in this case, the electric discharge inducing voltage of the positive polarity is applied as long as Vg (INT) is positive.

Time f: When the second timer 61 clocks the working pause t3 during normal working, it outputs the clocking finish signal to the control circuit 5, and the control circuit 5 outputs high control signal s4 responding to the clocking finish signal. During the deadtime, the interelectrode space is in a state where it is not applied with the electric discharge inducing voltage and the main electric discharge voltage, during which the insulating state at the interelectrode space is recovered.

Through the above mentioned steps ranging from time a to time f, the electric discharge working in a case where the electric discharge inducing voltage of the positive polarity is applied to the interelectrode space (a voltage polarity in which the working electrode is negative with reference to the workpiece) is finished.

Time f to time k: At time f, high control signal s4 is transmitted. In this case, since the output of the comparator 55 is high similarly to the case of the time a, the electric discharge inducing voltage of the positive polarity is applied to the interelectrode space. After that, the operations similar to the case of the time a to the time f are executed, and the electric discharge working in a case where the electric discharge inducing voltage of the positive polarity is applied to the interelectrode space at the time k is finished.

In this case, when the interelectrode space voltage Vg is integrated by the integrator 56, the integrated value thereof turns from the positive to the negative through zero during the period ranging from the time f to the time g, or during the period ranging from the time f to the time j. In the time chart of Fig. 2, the integrated value is inverted from positive to negative during the period from the time f to the time g. The change of polarity at Vg (INT) is detected by the comparator 55 with the reference value of 0V, and the output of the comparator 55 becomes low.

Time k: When the control signal s4 becomes high, the voltage of the comparator 55 is latched to the latching circuit 54 due to the leading edge of the control signal s4, and the output of the latching circuit 54 becomes low. The output of the latching circuit 54 makes the logical product of the AND gate 52 low and turns off the switching elements 44 and 45. And, the output of the latching circuit 54 is inverted by the inverter 53 to become high, and the output of the logical product of the AND gate 52 become high. This high output turns on the switching elements 46 and 47 of the electric discharge inducing circuit 4, and applies the electric discharge inducing voltage of the inverted polarity to the interelectrode space.

Fig. 5 shows a circuit connection of the power source section of the electric discharge apparatus in a case where the switching elements 44 and 45 are turned off, the switching elements 46 and 47 are turned on, and the switching elements 32 and 33 are turned off. The negative electrode of the electric discharge inducing power source 41 is connected to the workpiece 2, and the positive electrode of the electric discharge inducing power source 41 is connected to the working electrode 1, whereby the electric discharge inducing voltage of the reverse polarity to that at the time a shown in Fig. 3 is applied to the interelectrode space.

When the electric discharge inducing voltage of the reverse polarity is applied to the working electrode 1, there is continued a state in which the interelectrode space voltage Vg of the reverse polarity is kept applied to the interelectrode space until the dielectric breakdown occurs to cause the start of electric discharge. In the time chart of Fig. 2, a period T2 represents a time interval from the time the electric discharge inducing voltage is applied to the working electrode 1 to the time of dielectric breakdown.

Also, from the time k, the polarity applied to the interelectrode space become reverse, so that the integration direction by the integrator 56 increases in such a direction in which the integration value Vg (INT) becomes positive, reversely to the case of the above mentioned electric discharge step.

Time l: When the dielectric breakdown occurs to cause the electric discharge, the absolute value of the interelectrode space voltage Vg decreases (In the time chart in Fig. 2, it is represented as an downward change.). The current Ig flows due to the electric discharge at the interelectrode space. The direction of the current Ig becomes reverse to that at the time b and the time g. The control circuit 5 detects the electric discharge based on the variation of the interelectrode space voltage Vg and through the output of the differential amplifier 57.

Time m: The control circuit 5 detecting the electric discharge outputs high control signal s3 to turn on the switching elements 32 and 33 of the main electric discharge circuit, the main electric discharge power source 31 is applied to the working electrode 1 and the interelectrode space of the workpiece 2, and sends the main electric discharge current Ig. This direction of the main electric discharge current Ig is identical with the direction of an arrow shown in Fig. 5. On the other hand, since the control signal s4 becomes low, the output of the logical product of the AND gate 52 becomes low to turn off switching element 46.

Also, the output of the AND gate 51 remains low, and the switching elements 44 and 45 remains turned off.

Accordingly, all of the switching elements 44, 45, 46 and 47 are turned off, so that the application of the electric discharge inducing voltage to the interelectrode is discontinued. This circuit state is similar to that of Fig. 4, and the main electric discharge voltage is the main electric discharge current Ig.

Moreover, since there is a time delay during between the drop of the interelectrode space voltage Vg and the turning on of the switching elements 32 and 33, there occurs a time delay of tl during between the start of the electric discharge and the turning on of the switching elements 32 and 33 like the previously mentioned case.

And, in order to maintain the electric discharge during this time delay, the switching elements 46 and 47 are kept turn on until the switching elements 32 and 33 are turned on.

Moreover, in order for the electric discharge to surely become the main electric discharge current, turning on period of the switching elements 46 and 47 and a turning on period of the switching elements 32 and 33 can be controlled so as to overlap with each other.

Time n and time o: The control circuit 5 outputs low control signal s3 after a predetermined time t2 elapsed, turns off the switching elements 32 and 33 of the main electric discharge circuit 3, and starts to clock the working downtime t3 during normal working by the second timer 61.

The voltage application to the working electrode 1 of the main electric discharge power source 31 and the workpiece 2 is stopped by turning off the switching elements 32 and 33; however, since the electromagnetic energy accumulated in an inductance component of the main electric discharge circuit 3 is released through the diodes 34 and 35, the main electric discharge current Ig continues to flow even after the switching elements 32 and 33 are turned off.

Time p: When the second timer 61 clocks the downtime t3 during normal working, it outputs an clocking finish signal to the control circuit 5, and the control circuit 5 outputs high control signal s4 according to this clocking finish signal.

Since the output Vg (INT) of the integrator 56 is positive, the voltage of the positive polarity is applied to the interelectrode space. Simultaneously, the first timer 60 starts to operate.

Also, during the deadtime during the time o to the time p, neither the electric discharge inducing voltage nor the main electric discharge voltage is applied to the interelectrode space, during which the insulating state of the interelectrode space is recovered.

And, through the above mentioned steps ranging from the time k to the time p, the electric discharge working where the electric discharge inducing voltage of the opposite polarity is applied to the interelectrode space (a voltage polarity in which the working electrode is positive with reference to the workpiece) is finished.

Time q: When the first timer 60 finishes the clocking before the interelectrode discharge starts, the first timer 60 outputs the clocking signal to the control circuit 5. The control circuit 5 receives this clocking signal to output low control signal s4, thereby stopping the application of the voltage to the interelectrode space.

Simultaneously, the control circuit 5 outputs high control signal s6 and starts the clocking of the third timer 62. The third timer 62 is set by a time shorter than that defined by the second timer 61 which defines the downtime at the time of the usual working.

In this case, since the insulation of the interelectrode space is maintained, the main electric discharge current does not flow, so that the operation enters the period of the deadtime.

Time r: When the third timer 62 finishes the clocking of the pause, the control circuit 5 receives the finish of the clocking to output high control signal s4 high to resume the application of the voltage to the interelectrode space is restarted.

During the period from the time p to the time q, the sign of the output Vg (INT) of the integrator 56 is changed from the positive to the negative, and as a result, the electric discharge inducing voltage of the reverse polarity is applied to the interelectrode space.

Time r to time w: The operations at these points are the same as those at the time k to the time p, and so the explanation thereof is omitted.

In this case, when the interelectrode space voltage Vg is integrated by the integrator 56, the integrated value thereof turns from the negative to the positive through zero during from the time k to the time 1, or during from the time k to the time m. In the time chart of Fig. 2, the integrated value is inverted from negative to positive during from the time k to the time 1. The polarity change of Vg (INT) is detected by the comparator 55 with the reference value of 0V, and the this causes output of the comparator 55 to become high.

And, the electric discharging steps from time a to the time f (the time f to the time k) by the electric discharge inducing voltage of the positive polarity and the electric discharging steps from the time k to the time p by the electric discharge inducing voltage of the reverse polarity are repeated to execute the electric discharge working of the workpiece.

Then, the interval of the electric discharge steps from the time a to the time e, and the time f to the time j by the electric discharge inducing voltage of the positive polarity and the interval of the electric discharge steps from the time k to the time m by the electric discharge inducing voltage of the reverse voltage are compared. In both of these intervals, the integrated value corresponding to the value as the product obtained by multiplying the sum of the applied voltage and the reference voltage by the duration application is controlled so that an average value thereof obtained by the integrator 56 becomes "0", thereby enabling the polarity of the voltage applied to the interelectrode space to be changed.

Accordingly, the average voltage at the interelectrode space is controlled so as to be reverse in polarity to the reference voltage 58 and identical in absolute value, so that the optimum working suiting the material of the workpiece can be executed.

Incidentally, in this embodiment, when the output of the latching circuit 54 is inverted, there is a case that a pulse like signal appears in the AND gate. The appearance of such signal is caused by the delay of the operation of the latching circuit 54, since it is constituted that a logical product of the latching circuit 54 and the control signal s4 is taken at the AND gate 51, and a logical product of the signal generated by inverting the output of the latching circuit 54 by the inverter 53 and the control signal s4 is taken at the AND gate 52, whereby the latching circuit 54 is latched at the leading edge of control signal s4. For example, at the time k of the time chart of Fig. 2, a pulse is generated at the output of the AND gate 51.

In Fig. 1, it is constituted that a delay circuit is inserted between the control circuit 5 and the input ends of the AND gate 51 and the AND gate 52, so that an occurrence of this pulse signal can be prevented by delaying the control signal s4 by the delay circuit until the output of the latching circuit 54 is determined.

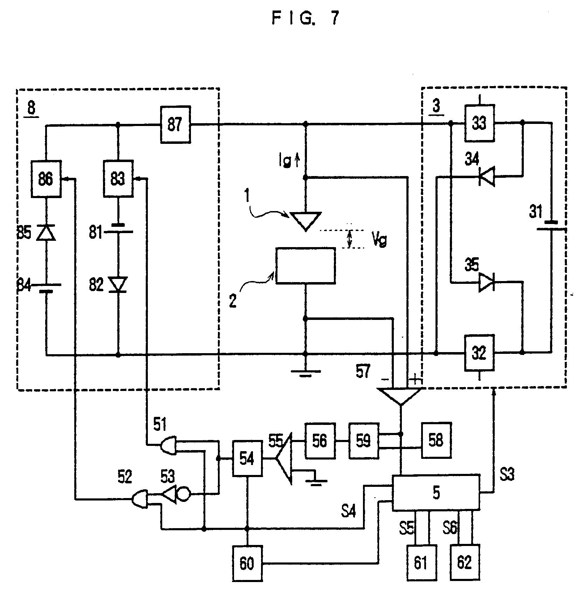

Next, the construction and the operation of a second embodiment of the present invention will be described with reference to Fig. 7.

Fig. 7 is a block constructional diagram of a power source section of an electric discharge working apparatus, which explains a second embodiment of the electric discharge present invention. The construction of the second embodiment of the present invention shown in Fig. 7 is substantially the same as that of the first embodiment of the present invention, and includes the working electrode 1, the workpiece 2, the main electric discharge circuit 3, the electric discharge inducing circuit 8, and the control circuit 5. The constitutional difference between the first embodiment and the second embodiment resides in the constitution of the electric discharge inducing circuit 8. Thus, only the electric discharge inducing circuit 8 will be described hereinafter, and the explanations for the rest such as the working electrode 1, the workpiece 2, the main electric discharge circuit 3, and the control circuit 5 will be omitted.

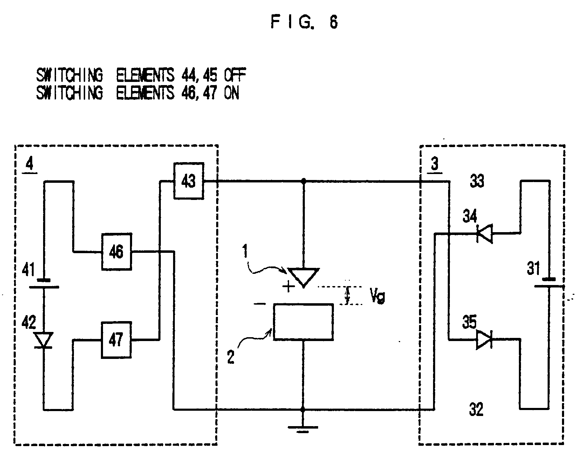

The electric discharge inducing circuit 8 in the second embodiment of the present invention is adapted to use two electric sources, that is, one for the voltage of positive polarity and the other for the voltage of reverse polarity, which are opened and closed by the switching elements to change the polarity of the electric discharge inducing voltage to the interelectrode space. In Fig. 6, there are connected in parallel with each other a serial circuit of the electric discharge inducing power source 81 for the positive voltage, the diode 82, and the switching element 83, and a serial circuit of the electric discharge inducing power source 84, the diode 85, and the switching element 86, and these circuits are connected to the working electrode 1 and the workpiece 2 through the current restricting resistance 87. And, the current restricting resistance 87 and the electric discharge inducing power source 84 are reverse in polarity to the working electrode 1 or the workpiece 2.

The connection of each of electric discharge inducing power sources to the interelectrode space is made through the switching elements provided thereto respectively, and the switching elements are changed over by the signals from the AND gates 51 and 52.

Next, the operation of the second embodiment of the present invention will be described The operation of the second embodiment of the present invention is substantially identical with that of the first embodiment, but is different therefrom only in the changing over of the electric source of the electric discharge inducing circuit 8. Accordingly, only the changing over of the electric source of the electric discharge inducing circuit 8 will be described hereinafter.

Respective electric sources for the positive polarity voltage and the reverse polarity voltage of the electric discharge inducing circuit 8 are connected to the interelectrode space by opening and closing the switching element 83 and the switching element 86, and the switching element 83 and the switching element 86 are controlled by the outputs of the AND gates 51 and 52, so that only one of the electric sources can selectively be connected as shown in the above mentioned first embodiment.

According to the construction of the second embodiment, two of the direct current sources are necessary; however, this embodiment brings the effects such that the number of the switching elements can be reduced, and that the shift of the operation timing of the switching elements need not be considered.

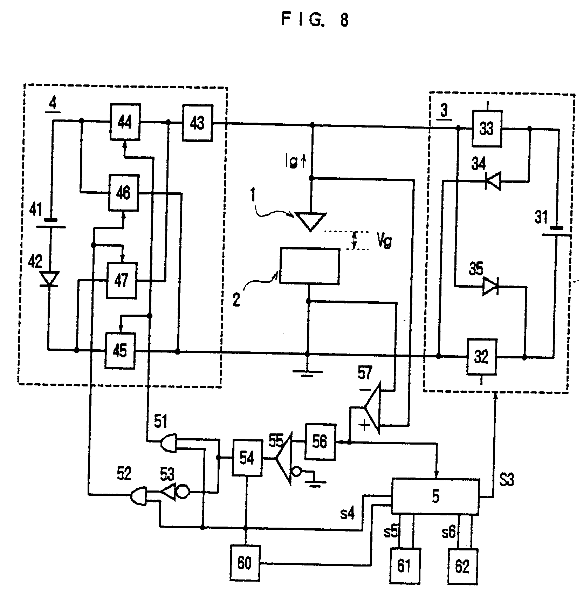

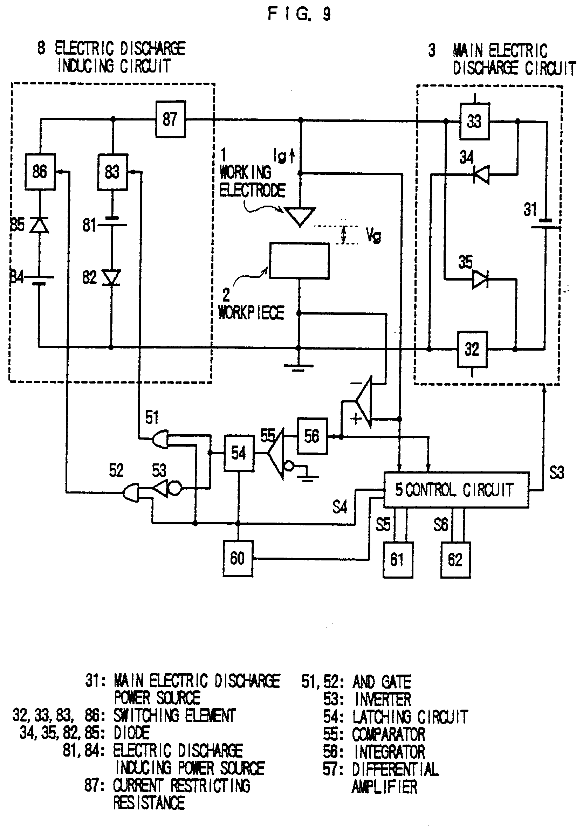

Another embodiment of the present invention will be described with reference to Figs. 8 and 9.

The embodiments of Figs. 8 and 9 correspond to the cases of the embodiments shown in Figs. 1 and 7 where the reference voltage for comparison with the average interelectrode voltage and for the control is set to 0V respectively, and are constitutional examples in a case where the changing over of the polarity of the electric discharge inducing voltage to the interelectrode space is executed in such a manner that the average voltage coincides with 0V.

In the embodiments of Figs. 8 and 9, the interelectrode space voltage from the differential amplifier 57 is integrated by the integrator 56, and the integrated value of the integrator 56 is compared with 0V by the comparator 55 in the construction of the switching circuit same as that of the embodiments shown in Figs. 1 and 7. The control of the electric discharge inducing circuit 4 is executed by the output of the comparator 55 and control signal s4 from the control circuit 5 like the case of the first embodiment.

## Claims

1. An electric discharge working method designed to operate by applying an electric discharge inducing voltage to an interelectrode space formed between a working electrode and a workpiece, and by superposing an electric discharge inducing current thereto just after the dielectric breakdown caused by the electric discharge induced due to the electric discharge inducing voltage,
the method being characterized by the steps of:
detecting a voltage at the interelectrode space; and changing a polarity of the electric discharge inducing voltage in dependence upon the detected interelectrode space voltage in such manner that the value over time of the interelectrode space voltage coincides with a reference value thereof.

2. An electric discharge working method according to claim 1, wherein said value over time of the interelectrode space voltage is an integrated value of the interelectrode space voltage.

3. An electric discharge working method according to claim 1, wherein said value over time of the interelectrode space voltage is an average value of the interelectrode space voltage.

4. An electric discharge working method according to claim 2 or claim 3, wherein said reference value is variable.

5. An electric discharge working method according to claim 2 or claim 3, wherein said reference value is 0.

6. An electric discharge working method according to any one of claims 1 to 5, wherein an application of the electric discharge inducing voltage is stopped when the electric discharge is not induced within a predetermined time following the start of the application of the electric discharge inducing voltage, and an application of the next electric discharge inducing voltage is started after a pause period shorter than the pause period during normal working.

7. An electric discharge working apparatus for supplying a working current by generating an intermittent electric discharge at an interelectrode space formed between a working electrode (1) and a workpiece (2) to execute material-removing work on the workpiece (2), the apparatus being characterized by comprising:
an electric discharge inducing circuit (4) arranged for applying to the interelectrode space voltages of a positive polarity and a negative polarity for inducing the electric discharge;
a main electric discharge circuit (3) arranged for supplying a working current pulse to the interelectrode space after the electric discharge working is started; and
a control means (5) arranged for detecting the voltage at the interelectrode space and for outputting, to the electric discharge inducing circuit (4), an instruction for applying the voltage for inducing the electric discharge and an instruction for changing over the polarity of said voltage.

8. An electric discharge working apparatus according to claim 7, wherein the control means (5) comprises:
an integrating means (56) for integrating the interelectrode space voltage;
a comparing means (55) for comparing the integrated value with a reference value; and
a signal output means for outputting, to the electric discharge inducing circuit (4), a signal for selecting the polarity of the discharge-inducing voltage in response to an output of the comparing means (55).

9. An electric discharge working apparatus according to claim 7, wherein the control means (5) comprises:
a detecting means (56) for detecting an average value of the interelectrode space voltage;
a comparing means (55) for comparing the average value with a reference value; and
a signal output means for outputting, to the electric discharge inducing circuit (4), a signal for selecting the polarity of the discharge-inducing voltage in response to an output of the comparing means (55).

10. An electric discharge working apparatus according to claim 8 or claim 9, wherein the reference value is variable.

11. An electric discharge working apparatus according to any one of claims 7 to 10, wherein the control means (5) comprises a first timer (60) for operating only during the application of the voltage to the interelectrode space, a second timer (61) for defining a working pause at a normal working, and a third timer (62) for defining a deadtime period different from the pause period during normal working, and is arranged to stop an operation instruction for applying the voltage to the electric discharge inducing circuit (4) in response to an output of the first timer (60), to operate the third timer (62), and to start an application of a next electric discharge inducing voltage in response to an output of the third timer (62).

## Patentansprüche

1. Verfahren zur Bearbeitung mittels elektrischer Entladung, das dafür vorgesehen ist, durch Legen einer eine elektrische Entladung herbeiführenden Spannung über einen Elektrodenzwischenraum, der zwischen einer Bearbeitungselektrode und einem Werkstück gebildet ist, und durch Überlagern eines eine elektrische Entladung herbeiführenden Stroms direkt nach dem dielektrischen Durchbruch zu arbeiten, der durch die elektrische Entladung verursacht wird, die aufgrund der die elektrische Entladung herbeiführenden Spannung erfolgt,
welches Verfahren **gekennzeichnet** ist durch Schritte zum
Erfassen ein Spannung über dem Elektrodenzwischenraum und
Wechseln einer Polarität der die elektrische Entladung herbeiführenden Spannung in Abhängigkeit von der erfaßten Spannung über dem Elektrodenzwischenraum in einer Weise, daß der Wert der Spannung über dem Elektrodenzwischenraum über die Zeit mit einem Referenzwert derselben zusammenfällt.

2. Verfahren zur Bearbeitung mittels elektrischer Entladung nach Anspruch 1, bei dem der Wert der Spannung über dem Elektrodenzwischenraum über die Zeit ein integrierter Wert der Spannung über dem Elektrodenzwischenraum ist.

3. Verfahren zur Bearbeitung mittels elektrischer Entladung nach Anspruch 1, bei dem der Wert der Spannung über dem Elektrodenzwischenraum über die Zeit ein Mittelwert der Spannung über dem Elektrodenzwischenraum ist.

4. Verfahren zur Bearbeitung mittels elektrischer Entladung nach Anspruch 2 oder 3, bei dem der Referenzwert variabel ist.

5. Verfahren zur Bearbeitung mittels elektrischer Entladung nach Anspruch 2 oder 3, bei dem der Referenzwert 0 ist.

6. Verfahren zur Bearbeitung mittels elektrischer Entladung nach einem der Ansprüche 1 bis 5, bei dem ein Anlegen der die elektrische Entladung herbeiführenden Spannung unterbrochen wird, wenn die elektrische Entladung nicht innerhalb einer vorbestimmten Zeit, die dem Beginn des Anlegens der die elektrische Entladung herbeiführenden Spannung folgt, herbeigeführt ist, und ein Anlegen der die nächste elektrische Entladung herbeiführenden Spannung nach einer Pausenperiode begonnen wird, die kürzer als die Pausenperiode während einer normalen Bearbeitung ist.

7. Vorrichtung zur Bearbeitung mittels elektrischer Entladung zum Zuführen eines Bearbeitungsstroms durch Erzeugen einer intermittierenden elektrischen Entladung in einem zwischen einer Bearbeitungselektrode (1) und einem Werkstück (2) gebildeten Elektrodenzwischenraum, um eine Materialentfernungsbearbeitung an dem Werkstück (2) auszuführen, welche Vorrichtung dadurch **gekennzeichnet** ist, daß sie umfaßt:
eine Schaltung (4) zum Herbeiführen einer elektrischen Entladung, die zum Legen von Spannungen einer positiven Polarität und einer negativen Polarität über den Elektrodenzwischenraum zum Herbeiführen der elektrischen Entladung eingerichtet ist,
eine Hauptschaltung (3) für die elektrische Entladung, die zum Zuführen eines Bearbeitungsstromimpulses zu dem Elektrodenzwischenraum, nachdem die Bearbeitung mittels elektrischer Entladung gestartet ist, eingerichtet ist, und
ein Steuermittel (5), das zum Erfassen der Spannung über dem Elektrodenzwischenraum und zum Ausgeben eines Befehls zum Anlegen der Spannung zum Herbeiführen der elektrischen Entladung und eines Befehls zum Umschalten der Polarität der Spannung an die Schaltung (4) zum Herbeiführen der elektrischen Entladung eingerichtet ist.

8. Vorrichtung zur Bearbeitung mittels elektrischer Entladung nach Anspruch 7, in der das Steuermittel (5) umfaßt:
ein Integrationsmittel (56) zum Integrieren der Spannung über dem Elektrodenzwischenraum,
ein Vergleichsmittel (55) zum Vergleichen des integrierten Wert mit einem Referenzwert und
ein Signalausgabemittel zum Ausgeben an die Schaltung (4) zum Herbeiführen einer elektrischen Entladung eines Signals zum Auswählen der Polarität der eine Entladung herbeiführenden Spannung in Reaktion auf ein Ausgangssignal des Vergleichsmittels (55).

9. Vorrichtung zur Bearbeitung mittels elektrischer Entladung nach Anspruch 7, in der das Steuermittel (5) umfaßt:
ein Erfassungsmittel (56) zum Erfassen eines Mittelwerts der Spannung über dem Elektrodenzwischenraum,
ein Vergleichsmittel (55) zum Vergleichen des Mittelwerts mit einem Referenzwert und
ein Signalausgabemittel zum Ausgeben an die Schaltung (4) zum Herbeiführen einer elektrischen Entladung eines Signals zum Auswählen der Polarität der die Entladung herbeiführenden Spannung in Reaktion auf ein Ausgangssignal des Vergleichsmittels (55).

10. Vorrichtung zur Bearbeitung mittels elektrischer Entladung nach Anspruch 8 oder 9, wobei der Referenzwert variabel ist.

11. Vorrichtung zur Bearbeitung mittels elektrischer Entladung nach einem der Ansprüche 7 bis 10, in der das Steuermittel (5) umfaßt:
einen ersten Zeitgeber (60) zum Arbeiten nur während des Legens der Spannung über den Elektrodenzwischenraum,
einen zweiten Zeitgeber (61) zum Definieren einer Bearbeitungspause bei einer normalen Bearbeitung und
einen dritten Zeitgeber (62) zum Definieren einer Verzugszeitperiode, die von der Pausenperiode während einer normalen Bearbeitung verschieden ist, und der eingerichtet ist, um einen Betriebsbefehl zum Anlegen der Spannung an die Schaltung (4) zum Herbeiführen einer elektrischen Entladung in Reaktion auf ein Ausgangssignal des ersten Zeitgebers (60) abzubrechen, um den dritten Zeitgeber (62) zu betreiben und um ein Anlegen einer die nächste elektrische Entladung herbeiführenden Spannung in Reaktion auf ein Ausgangssignal des drittes Zeitgebers (62) zu starten.

## Revendications

1. Procédé d'usinage par étincelage conçu pour être mis en oeuvre en appliquant une tension induisant une décharge électrique dans l'espace inter-électrodes formé entre une électrode de travail et une pièce à usiner, et en y superposant un courant induisant une décharge électrique juste après la rupture diélectrique provoquée par la décharge électrique induite par la tension induisant une décharge électrique,
le procédé étant caractérisé par les étapes consistant à:
détecter une tension dans l'espace interélectrodes, et modifier la polarité de la tension induisant une décharge électrique en fonction de la tension détectée dans l'espace inter-électrodes de telle sorte que la valeur temporelle de la tension de l'espace inter-électrodes coïncide avec une valeur de référence de cette dernière.

2. Procédé d'usinage par étincelage selon la revendication 1, dans lequel ladite valeur temporelle de la tension de l'espace inter-électrodes est une valeur intégrée de la tension de l'espace inter-électrodes.

3. Procédé d'usinage par étincelage selon la revendication 1, dans lequel ladite valeur temporelle de la tension de l'espace inter-électrodes est une valeur moyenne de la tension de l'espace inter-électrodes.

4. Procédé d'usinage par étincelage selon la revendication 2 ou 3, dans lequel ladite valeur de référence est variable.

5. Procédé d'usinage par étincelage selon la revendication 2 ou 3, dans lequel ladite valeur de référence est égale à zéro.

6. Procédé d'usinage par étincelage selon l'une quelconque des revendications 1 à 5, dans lequel on arrête l'application de la tension induisant une décharge électrique lorsque la décharge électrique n'a pas été induite dans un laps de temps prédéterminé faisant suite au début de l'application de la tension induisant une décharge électrique et on déclenche une application de la tension suivante induisant une décharge électrique après une période de pause plus courte que la période de pause au cours d'un usinage normal.

7. Appareil d'usinage par étincelage pour alimenter un courant de travail en générant une décharge électrique intermittente à un espace inter-électrodes formé entre une électrode de travail (1) et une pièce à usiner (2) pour réaliser un travail d'élimination de matière sur la pièce à usiner (2), l'appareil étant caractérisé par le fait qu'il comprend:
un circuit (4) induisant une décharge électrique, arrangé pour appliquer, dans l'espace inter-électrodes, des tensions de polarité positive et de polarité négative pour induire la décharge électrique;
un circuit principal de décharge électrique (3) arrangé pour alimenter une impulsion de courant de travail dans l'espace inter-électrodes après avoir déclenché la mise en oeuvre de la décharge électrique; et
un moyen de commande (5) arrangé pour détecter la tension régnant dans l'espace inter-électrodes et pour envoyer au circuit (4) induisant une décharge électrique, une instruction destinée à appliquer la tension pour induire la décharge électrique et une instruction pour renverser la polarité de ladite tension.

8. Appareil d'usinage par étincelage selon la revendication 7, caractérisé en ce que le moyen de commande (5) comprend:
un moyen d'intégration (56) pour intégrer la tension de l'espace inter-électrodes;
un moyen de comparaison (55) pour comparer la valeur intégrée à une valeur de référence; et
un moyen de sortie de signaux pour envoyer au circuit (4) induisant une décharge électrique, un signal pour sélectionner la polarité de la tension induisant la décharge en réponse à la sortie du moyen de comparaison (55).

9. Appareil d'usinage par étincelage selon la revendication 7, dans lequel le moyen de commande (5) comprend:
un moyen de détection (56) pour détecter une valeur moyenne de la tension de l'espace inter-électrodes;
un moyen de comparaison (55) pour comparer la valeur moyenne à la valeur de référence; et
un moyen de sortie de signaux pour envoyer au circuit (4) induisant une décharge électrique, un signal pour sélectionner la polarité de la tension induisant une décharge en réponse à la sortie du moyen de comparaison (55).

10. Appareil d'usinage par étincelage selon la revendication 8 ou 9, dans lequel la valeur de référence est variable.

11. Appareil d'usinage par étincelage selon l'une quelconque des revendications 7 à 10, dans lequel le moyen de commande (5) comprend une première horloge (60) conçue pour travailler uniquement lors de l'application de la tension à l'espace inter-électrodes, une deuxième horloge (61) conçue pour définir une période de pause au cours d'une mise en service normale, et une troisième horloge (62) conçue pour définir une période de temps mort différente de la période de pause au cours de la mise en service normale et qui est arrangée pour stopper une instruction de mise en service pour appliquer la tension au circuit (4) induisant une décharge électrique en réponse à la sortie de la première horloge (60), pour mettre la troisième horloge (62) en circuit et pour déclencher l'application d'une tension suivante induisant une décharge électrique en réponse à la sortie de la troisième horloge (62).
